# EUROPÄISCHE PATENTSCHRIFT

(11) **EP 2 855 373 B1**
(45) Veröffentlichungstag und Bekanntmachung des Hinweises auf die Patenterteilung: **18.04.2018**
(21) Anmeldenummer: 13723689.9
(22) Anmeldetag: 29.04.2013
(51) Int. Cl.: C02F 103/34, C02F 1/48, B01D 63/10, B01D 61/58, B01D 61/48, C02F 1/78, C02F 9/00, C02F 103/04, C02F 1/72, C02F 1/44, C02F 1/469, B01D 61/02, C02F 1/20, C02F 1/28

(54) **VERFAHREN UND ANLAGE ZUR AUFBEREITUNG VON WASSER**
METHOD AND APPLIANCE FOR TREATING WATER
PROCÉDÉ ET INSTALLATION DE TRAITEMENT DE L'EAU

(30) Priorität: 24.05.2012 DE 102012208778
(43) Veröffentlichungstag der Anmeldung: 08.04.2015
(73) Patentinhaber: BWT Aqua AG, 4147 Aesch (CH)
(72) Erfinder: BALIDAS, Pierre, F-68510 Uffheim (FR); BEUSSHAUSEN, Swen, 79585 Steinen (DE); BRAND, Christian, F-68350 Brunstatt (FR); JOHANN, Jürgen, 69226 Nussloch (DE)
(74) Vertreter: Patentanwaltskanzlei Cartagena
(86) Internationale Anmeldenummer: PCT/EP2013/058915
(87) Internationale Veröffentlichungsnummer: WO 2013/174628

(56) Entgegenhaltungen:
- EP-A1- 1 803 689
- WO-A1-2010/054782
- US-A1- 2008 264 773
- US-B1- 6 461 512

## Beschreibung

Die vorliegende Erfindung betrifft ein mehrstufiges Verfahren zur Aufbereitung von Wasser und eine Anlage zur Durchführung des Verfahrens.

Die Aufbereitung von Wasser ist in der heutigen Zeit von stets steigender Bedeutung. Neben Trinkwasser werden insbesondere in der chemischen und pharmazeutischen Industrie hochreine Prozesswässer benötigt, die in großer Menge möglichst preiswert bereitgestellt werden müssen. Hochreines Wasser wird des Weiteren vor allem auch in der Halbleiterindustrie benötigt, beispielsweise zur Spülung von Siliziumwafern, insbesondere nach Ätzprozessen. Die Anforderungen an die Reinheit des Wassers sind in diesem Bereich bekanntlich besonders hoch.

Stand der Technik bei der Bereitstellung von Reinstwasser sind mehrstufige Verfahren umfassend eine erste Stufe, in der Rohwasser enthärtet und/oder bereits teilweise entsalzt wird, eine zweite Stufe, in der das Wasser aus der ersten Stufe in einem druckgetriebenen Membrantrennverfahren weiter aufgereinigt wird und eine dritte Stufe, in der das Wasser abschließend im Wesentlichen vollständig deionisiert wird, beispielsweise durch Elektrodeionisation (EDI). Zusätzliche Verfahrensschritte können beispielsweise zur Eliminierung von organischen Verunreinigungen vorgesehen sein.

Die Wasserenthärtung und/oder Entsalzung in der ersten Stufe erfolgt in der Regel durch Einsatz von einem oder mehreren Ionentauschern. Für die Enthärtung werden bevorzugt Kationentauscher in Natriumform eingesetzt, während für die Entsalzung Kombinationen aus Kationen- und Anionentauschern üblich sind. Die ionische Gesamtfracht des aufzubereitenden Wassers kann so bereits merklich reduziert werden.

Als Membrantrennverfahren kommen insbesondere die Umkehrosmose sowie die Nanofiltration, gegebenenfalls auch in Kombination miteinander, in Frage. Wenn im Rohwasser größere Mengen an gelöstem Kohlendioxid vorhanden sind, so kann vor oder nach dem Membrantrennverfahren ein zusätzlicher Entgasungsschritt vorgesehen sein.

Sofern eine hohe Wasserausbeute von Bedeutung ist, kann das Konzentrat aus der Membrantrennstufe in einer weiteren zusätzlichen Membrantrennstufe aufbereitet werden.

Elektrodeionisationseinrichtungen erfordern in üblichen Bauarten stets eine Lösung, die die aus dem aufzubereitenden Wasser abgetrennten Ionen aufnimmt und aus der Vorrichtung abführt (Konzentrat). Diese Lösung fließt durch mindestens eine Konzentratkammer, das aufzubereitende Wasser durch mindestens eine Diluatkammer. Eine hohe ionische Leitfähigkeit in den Konzentratkammern wird dabei bekanntlich insbesondere dadurch erzielt, dass
- eine Zudosierung z.B. von Neutralsalzen erfolgt,
- das Konzentrat durch die Konzentratkammern rezirkuliert wird, so dass sich die abgetrennten Ionen dort anreichern oder
- die Konzentratkammern (wie gegebenenfalls auch die Diluatkammern) mit Ionentauscherharzen gefüllt werden.

Aus der WO 2010/054782 A1 ist ein mehrstufiges Verfahren zur Aufbereitung von Wasser bekannt, bei dem ein Wasserstrom einer ersten Membrantrennvorrichtung zugeführt wird, wo er in einen Konzentratstrom und einen Permeatstrom aufgeteilt wird. Der Permeatstrom wird einer nachgeschalteten Elektrodeionisationseinrichtung zugeführt, der Konzentratstrom in einer zweiten Membrantrennvorrichtung aufgearbeitet. Das aus der zweiten Membrantrennvorrichtung austretende Permeat wird in die Konzentratkammern der nachgeschalteten Elektrodeionisationseinrichtung eingespeist und auf diese Weise weiter verwertet. Aus der Elektrodeionisationseinrichtung austretendes Konzentrat kann gegebenenfalls wieder in den Zulauf der ersten Membrantrennvorrichtung eingespeist werden.

Aus der US 6461512 B1 ist ein Verfahren zum Desinfizieren einer Wasseraufbereitungsanlage bekannt. Die zu desinfizierende Anlage umfasst unter anderem eine Umkehrosmoseeinrichtung als Membrantrennvorrichtung sowie eine Elektrodeionisationseinrichtung.

Aus der EP 1803689 A1 ist ein System zur Wasseraufbereitung bekannt. Das aufzubereitende Wasser wird unter anderem demineralisiert. Hierzu wird es einer mehrstufigen Umkehrosmose unterzogen. Das hieraus resultierende Permeat wird einer Elektrodionisation unterzogen.

Aus der US 2008/0264773 A1 ist ein Verfahren zur Aufbereitung von Wasser bekannt, bei dem Wasser in einer zweistufigen Umkehrosmose vorbehandelt und anschließend einer Elektrodeionisation unterzogen wird.

Der vorliegenden Erfindung lag die Aufgabe zugrunde, die bekannten Wasseraufreinigungsverfahren mit einer Abfolge von Membrantrennvorrichtungen und Elektrodeionisationseinrichtungen weiter zu verbessern, insbesondere hinsichtlich der zu erzielenden Wasserausbeute.

Diese Aufgabe wird gelöst durch das Verfahren mit den Merkmalen des Anspruchs 1 sowie die Anlage mit den Merkmalen des Anspruchs 9. Bevorzugte Ausführungsformen des erfindungsgemäßen Verfahrens sind in den abhängigen Ansprüchen 2 bis 8 angegeben. Der Wortlaut sämtlicher Ansprüche wird hiermit durch Bezugnahme zum Inhalt dieser Beschreibung gemacht.

Bei dem erfindungsgemäßen Verfahren handelt es sich um ein mehrstufiges Verfahren zur Aufbereitung von Wasser, insbesondere zur Herstellung von Reinstwasser, das sich für die eingangs genannten Anwendungen eignet. Bei dem Verfahren wird ein Rohwasserstrom zuerst in eine Membrantrennstufe eingespeist und anschließend in einer dieser nachgeschalteten Deionisationsstufe weiter aufgereinigt. Die Membrantrennstufe umfasst dabei eine erste und zweite Membrantrennvorrichtung, die Deionisationsstufe mindestens eine Elektrodeionisationseinrichtung, die wiederum mindestens eine Konzentratkammer und mindestens eine Diluatkammer umfasst.

Bei dem Rohwasserstrom handelt es sich bevorzugt um enthärtetes Wasser, also um Wasser, das, wie eingangs definiert, mit einem Kationentauscher, insbesondere in Natriumform, behandelt wurde.

Bei den Membrantrennvorrichtungen kann es sich um Umkehrosmose- oder um Nanofiltrationsvorrichtungen handeln, gegebenenfalls auch um eine Kombination. So kann es sich beispielsweise sowohl bei der ersten als auch bei der zweiten Membrantrennvorrichtung um eine Umkehrosmosevorrichtung handeln oder bei der ersten um eine Umkehrosmosevorrichtung und bei der zweiten um eine Nanofiltrationsvorrichtung.

Bevorzugt handelt es sich bei der ersten Membrantrennvorrichtung um eine Umkehrosmosevorrichtung und bei der zweiten um eine Nanofiltrationsvorrichtung. In diesem Fall entspricht die Leitfähigkeit des zweiten Permeatstroms in etwa der des Rohwasserstroms. Dies kann insofern vorteilhaft sein, als sich dadurch die Notwendigkeit erübrigt, in der nachgeschalteten Elektrodeionisationseinrichtung künstlich die ionische Leitfähigkeit in der oder den Konzentratkammern zu erhöhen, beispielsweise durch die eingangs genannten Maßnahmen wie das Befüllen der Konzentratkammern mit lonentauscherharzen. Insbesondere diese Maßnahme kann nämlich sehr nachteilhaft sein. Die Füllung der Konzentratkammer mit Ionenaustauscherharzen bedingt zum einen eine Erhöhung des Druckverlusts und zum anderen, insbesondere bei paralleler Anströmung von bis zu 50 Konzentratkammern in sog. Platten-EDI-Modulen, ein erhöhtes mikrobiologisches Risiko im Konzentratspülwasser, das eine Rückführung des selbigen bedenklich erscheinen lässt.

Als Elektrodeionisationseinrichtungen eignen sich insbesondere solche mit Wickelaufbau. Dabei sind zwei miteinander ionenselektive Membranen spiralförmig um eine stab- oder rohrförmige Elektrode, bevorzugt die Anode gewickelt.

Die beiden Membranen sind in der Regel an den Randbereichen miteinander verbunden, beispielsweise durch Verschweißung. Gemeinsam bilden sie einen ersten Zwischenraum aus, der als Konzentratkammer dient. Dieser kann mit einem lonentauscherharz befüllt sein, muss es aber nicht. Insbesondere, wenn der Elektrodeionisationseinrichtung eine Abfolge von Umkehrosmose und Nanofiltration vorgeschaltet ist, ist die Konzentratkammer bevorzugt nicht mit lonentauscherharzen befüllt.

Gegebenenfalls sind Abstandshalter vorgesehen, die den Abstand zwischen den Membranen definieren. Beim Wickeln der Membranen wird darauf geachtet, dass ein Abstand zwischen einzelnen Windungen verbleibt, wodurch ein zweiter, spiralförmiger Zwischenraum ausgebildet wird. Dieser Raum dient als Diluatkammer. Die Wicklung wird außen mit der Gegenelektrode, insbesondere der Kathode, abgeschlossen.

Üblicherweise werden die Konzentrat- und die Diluatkammer von außen gespeist. Das aufzureinigende Wasser strömt also bevorzugt zuerst die Kathode an und wird Windung für Windung in Wickelinnere geleitet, wo ein Auslass vorgesehen ist.

Wie aus dem Stand der Technik bekannt, wird auch beim erfindungsgemäßen Verfahren der aufzubereitende Rohwasserstrom in der ersten Membrantrennvorrichtung in einen ersten Konzentratstrom und einen ersten Permeatstrom aufgetrennt, wobei letzterer mindestens teilweise in die mindestens eine Diluatkammer einer Elektrodeionisationseinrichtung in der nachgeschalteten Deionisationsstufe eingespeist wird. Aus dieser tritt er als Produktstrom wieder aus. Zumindest ein Teil des ersten Konzentratstroms, vorzugsweise der ganze erste Konzentratstrom, wird in Analogie zum Stand der Technik in der zweiten Membrantrennvorrichtung aufgearbeitet und dabei in einen zweiten Konzentratstrom und einen zweiten Permeatstrom aufgetrennt. Der zweite Permeatstrom wird mindestens teilweise in die mindestens eine Konzentratkammer der nachgeschalteten Elektrodeionisationseinrichtung eingespeist, aus der er als dritter Konzentratstrom wieder austritt.

Besonders zeichnet sich das erfindungsgemäße Verfahren dadurch aus, dass der zweite und der dritte Konzentratstrom mindestens teilweise in einer Vorrichtung zur Entgasung von Wasser (Entgasungsvorrichtung) entgast und dem Rohwasserstrom zugesetzt werden, bevor dieser in die Membrantrennstufe eingespeist wird. Gemäß dem vorliegenden Verfahren wird also sowohl aus der zweiten Membrantrennvorrichtung als auch aus der Elektrodeionisationseinrichtung austretendes Konzentrat rezykliert, was, bezogen auf die Menge des Rohwassers, die Wasserausbeute des Verfahrens signifikant erhöht.

Bei einer einstufigen Membrantrennvorrichtung liegt die Wasserausbeute einer Gesamtanlage umfassend einen Enthärter, eine Membrantrennvorrichtung und eine Elektrodeionisationseinrichtung bevorzugt im Bereich von 65 - 70 %. Bei dem erfindungsgemäßen Verfahren wird die Elektrodeionisationsstufe mit einer Wasserausbeute von 100% betrieben. Gemeinsam mit der zweiten Membranvorrichtung kann somit die Gesamtwasserausbeute des Systems auf 85 - 90 % erhöht werden.

Bevorzugt werden der zweite und der dritte Konzentratstrom nach der Entgasung dem Rohwasserstrom zugesetzt. In einigen Ausführungsformen ist es hingegen bevorzugt, die Konzentratströme dem Rohwasserstrom zuzusetzen und die Mischung aus den drei Strömen zu entgasen. In dieser Ausführungsform werden also nicht nur die Konzentratströme entgast, sondern auch der Rohwasserstrom.

Eine Rezyklierung von Konzentrat aus Elektrodeionisationseinrichtungen und dessen Wiedereinspeisung in eine Membrantrennvorrichtung ist potenziell problematisch, da Konzentrat aus Elektrodeionisationseinrichtungen in der Regel gelöste Gase wie Wasserstoff oder Oxidationsprodukte wie Chlor, Wasserstoffperoxid und Ozon enthalten kann, die unter Umständen die Membranen in den Vorrichtungen beschädigen können. Dem wird vorliegend entgegengewirkt, indem die gasförmigen Bestandteile des dritten Konzentratstroms in der Entgasungsvorrichtung abgetrennt werden.

Es ist bevorzugt, dass der zweite und/oder der dritte Konzentratstrom und/oder der Rohwasserstrom in die Entgasungsvorrichtung eingedüst werden, insbesondere über eine Einstoff-Druckdüse. Ziel dieser Maßnahme ist, die zu entgasenden Flüssigkeiten weitestgehend zu zerstäuben, um so die Abtrennung von in den Flüssigkeiten gelösten Gasen wie Wasserstoff, Chlor oder Ozon zu erleichtern.

Es ist weiterhin bevorzugt, dass der zweite und/oder der dritte Konzentratstrom und/oder der Rohwasserstrom in der Entgasungsvorrichtung mit einem neutralen Gas, insbesondere mit Luft, gespült werden. Hierzu wird die Luft bevorzugt unter Druck in eine Mischung aus den Wasserströmen eingeblasen oder in diese eingeperlt.

In einer besonders bevorzugten Ausführungsform des erfindungsgemäßen Verfahrens wird der zweite Konzentratstrom als Treibmedium in eine Strahlpumpe eingespeist, die einen Unterdruck erzeugt, mit dem der dritte Konzentratstrom aus der mindestens einen Konzentratkammer der Elektrodeionisationseinrichtung gesaugt wird. Bevorzugt weist die Strahlpumpe einen Sauganschluss auf, der mit der mindestens einen Konzentratkammer der Elektrodeionisationseinrichtung gekoppelt ist. Durch die Strahlpumpe kann der Konzentratdruck in der Elektrodeionisationseinrichtung reduziert werden, was sich positiv auf deren Betriebsverhalten auswirken kann.

Einige aus der Elektrodeionisationseinrichtung stammende Verunreinigungen können durchaus positive Auswirkungen haben. So kann beispielsweise im dritten Konzentratstrom enthaltenes Wasserstoffperoxid oder Ozon dazu dienen, mikrobiologische Verunreinigungen im Rohwasserstrom und/oder im zweiten oder dritten Konzentratstrom oder der Mischung aus den drei Strömen zu bekämpfen und so eine Verkeimung nachgeschalteter Membrantrennvorrichtungen zu verhindern.

Gegebenenfalls kann es sogar bevorzugt sein, den Anteil an Wasserstoffperoxid und/oder an Ozon im dritten Konzentratstrom künstlich zu erhöhen. Es ist bevorzugt, dem in die Elektrodeionisationseinrichtung eintretenden zweiten Permeatstrom zu diesem Zweck künstlich Sauerstoff, beispielsweise durch Zudosierung von Luft, zuzufügen. Überschüssige Luft kann in der nachgeschalteten Elektrodeionisationseinrichtung entfernt werden.

Der Überschuss an Wasserstoffperoxid kann beispielsweise als Reduktionsmittel für eventuell im Wasser enthaltenes Chlor dienen. Gegebenenfalls entfällt damit die herkömmliche Reduktion des Chlors durch Natriumbisulfit-Dosierung, Aktivkohlefilter, UV-Oxidation oder ähnliche bekannte Maßnahmen. Mit dem erfindungsgemäßen Verfahren lassen sich bis 1.0 ppm freies Chlor aus Rohwässern vor dem Eintritt in die erste Membrantrennvorrichtung entfernen.

In diesem Zusammenhang hat es sich als besonders vorteilhaft erwiesen, die erwähnten Elektrodeionisationseinrichtungen mit Wickelaufbau zu verwenden und diese anodenseitig mit dem ersten und dem zweiten Permeatstrom zu speisen. Das Konzentrat tritt also beim Eintritt in den Wickel mit der Anode, beim Austritt mit der Kathode in Kontakt. Sofern die ionenselektiven Membranen um die Anode gewickelt sind, verläuft die Strömungsrichtung vorzugsweise sowohl des Diluats als auch des Konzentrats innerhalb des Wickels von innen nach außen. In diesem Fall kann an der Anode zusätzlicher Sauerstoff generiert werden, der an der Kathode zu einer verstärkten Produktion von Wasserstoffperoxid und einer entsprechenden Anreicherung desselben im dritten Konzentratstrom führt.

Begünstigt wird dieser Effekt, wenn die Anode eine Beschichtung umfassend Iridiumoxid oder aus Iridiumoxid aufweist. Der Kern der Anode besteht bevorzugt aus Titan. Der Vorteil einer solchen Beschichtung ist die Reduktion der anodischen Chlorgenerierung um bis 90%.

An den Elektroden finden hauptsächlich folgende Elektrodenreaktionen statt:

| | | | |
|---|---|---|---|
| Anode: | H₂O | -> | 2H⁺ + 2e⁻ + ½ O₂ |
| | 2 Cl⁻ | -> | Cl₂ + 2e⁻ |
| | O₂ + ½ O₂ | -> | O₃ |
| Kathode: | 2 H₂O + 2e⁻ | -> | 2 OH⁻ + H₂ |
| | H₂O + ½ O₂ | -> | H₂O₂ |

Um einer Schädigung von Membranen in den Membrantrennvorrichtungen entgegenzuwirken, kann es bevorzugt sein, dass der zweite und/oder der dritte Konzentratstrom und/oder der Rohwasserstrom mit einem Mittel zur Zerstörung oder Abtrennung von Oxidationsmitteln, insbesondere von Peroxiden, behandelt werden, bevor sie in die Membrantrennstufe eingespeist werden. Bei dem Mittel handelt es sich bevorzugt um einen Adsorber oder um einen Katalysator. Besonders geeignet sind Katalysatoren auf Edelmetallbasis, z.B. Platin- oder Palladium-Katalysatoren, Braunstein, Aktivkohle, etc.

Zur erfindungsgemäßen Anlage: Diese umfasst stets
- eine erste Membrantrennvorrichtung mit einem Zulauf für aufzubereitendes Wasser, einem Ablauf für Permeat und einem Ablauf für Konzentrat,
- eine zweite Membrantrennvorrichtung mit einem Zulauf für aufzubereitendes Wasser, einem Ablauf für Permeat und einem Ablauf für Konzentrat, und
- eine Elektrodeionisationseinrichtung mit mindestens einer Konzentratkammer und mindestens einer Diluatkammer, wobei auch diese jeweils einen Zulauf und einen Ablauf umfassen.

Der Konzentratablauf der ersten Membrantrennvorrichtung ist mit dem Zulauf der zweiten Membrantrennvorrichtung gekoppelt, der Permeatablauf der ersten Membrantrennvorrichtung mit dem Zulauf der Diluatkammer, und der Permeatablauf der zweiten Membrantrennvorrichtung mit dem Zulauf der Konzentratkammer.

Gegenüber aus dem Stand der Technik bekannten Anlagen zeichnet sich die erfindungsgemäße Anlage dadurch aus, dass sie eine Vorrichtung zur Entgasung von Wasser (Entgasungsvorrichtung) umfasst, deren Zulauf mit dem Ablauf der Konzentratkammer und dem Konzentratablauf der zweiten Membrantrennvorrichtung gekoppelt ist.

Auf die Funktion der einzelnen Anlagenteile wurde bereits eingegangen, auf die entsprechenden Ausführungen wird hiermit Bezug genommen.

Weitere Merkmale der Erfindung ergeben sich aus der nachfolgenden Beschreibung bevorzugter Ausführungsformen. Es sei an dieser Stelle explizit betont, dass sämtliche in der vorliegenden Anmeldung beschriebenen fakultativen Aspekte des erfindungsgemäßen Verfahrens bzw. der erfindungsgemäßen Anlage jeweils für sich allein oder in Kombination mit einem oder mehreren der weiteren beschriebenen fakultativen Aspekte bei einer Ausführungsform der Erfindung verwirklicht sein können. Die nachfolgende Beschreibung von bevorzugten Ausführungsformen dient lediglich zur Erläuterung und zum besseren Verständnis der Erfindung und ist in keiner Weise einschränkend zu verstehen.

### Figurenbeschreibung

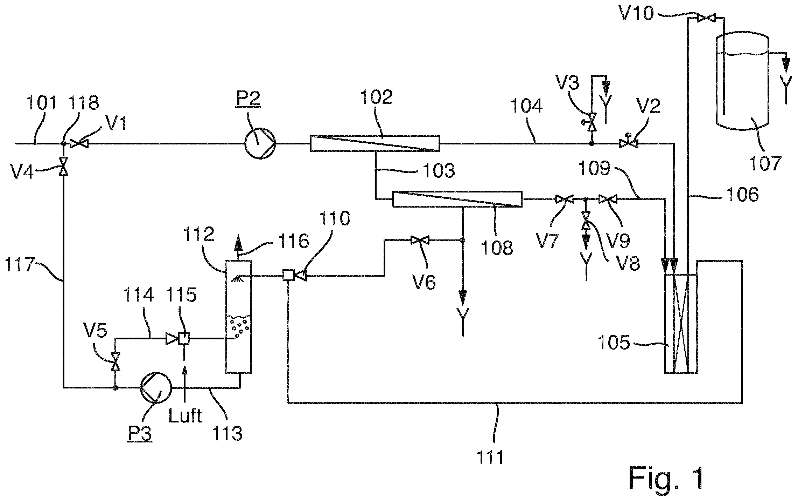

**Fig. 1** zeigt ein Fließbild einer Ausführungsform eines erfindungsgemäßen Verfahrens. Über die Leitung **101** tritt ein Rohwasserstrom (bevorzugt ein enthärteter Rohwassserstrom) ein, der mit Hilfe der Pumpe P2 in eine erste Membrantrennvorrichtung **102** überführt wird. In dieser erfolgt eine Auftrennung des Rohwasserstroms in einen ersten Konzentratstrom und einen ersten Permeatstrom. Der Permeatstrom wird über die Leitung **104** unmittelbar in die Elektrodeionisationseinrichtung **105** bzw. in die Diluatkammer derselben überführt. Über die Leitung **106** wird der aus der Elektrodeionisationseinrichtung **105** austretende Produktstrom in einen Speicher **107** überführt. Der erste Konzentratstrom wird über die Leitung **103** in die zweite Membrantrennvorrichtung **108** eingespeist. In dieser erfolgt eine Auftrennung des ersten Konzentratstroms in einen zweiten Konzentratstrom und einen zweiten Permeatstrom. Der zweite Permeatstrom wird über die Leitung **109** der Konzentratkammer der Elektrodeionisationseinrichtung **105** zugeführt. Der zweite Konzentratstrom wird in die Strahlpumpe **110** eingespeist. In dieser fungiert er als Treibmedium. Die Strahlpumpe **110** erzeugt einen Unterdruck, mit dem Konzentrat aus der Elektrodeionisationseinrichtung **105** über die Leitung **111** angesaugt wird. Das Konzentrat aus der Elektrodeionisationseinrichtung wird mit dem zweiten Konzentratstrom vermischt und in die Entgasungsvorrichtung **112** eingedüst. Aus dieser kann es mittels der Pumpe P3 über die Leitung **113** abgeführt werden, wobei über die Leitung **114** eine teilweise oder vollständige Kreislaufführung möglich ist. Das im Kreislauf geführte Medium kann dabei mit Luft versetzt werden, beispielsweise mittels der Strahlpumpe **115**. Über den Auslass **116** können die Luft sowie abgetrennte Gase wie in der Elektrodeionisationseinrichtung **105** generierter Wasserstoff abgeführt werden. Die entgaste Mischung kann über die Leitung **117** wieder der ersten Membrantrennvorrichtung **102** zugeführt werden. Hierzu erfolgt am Punkt **118** eine Vermischung der entgasten Mischung mit dem Rohwasserstrom aus der Leitung **101**.
   Die Bezugszeichen V1 bis V10 bezeichnen im Übrigen schließbare Ventile.

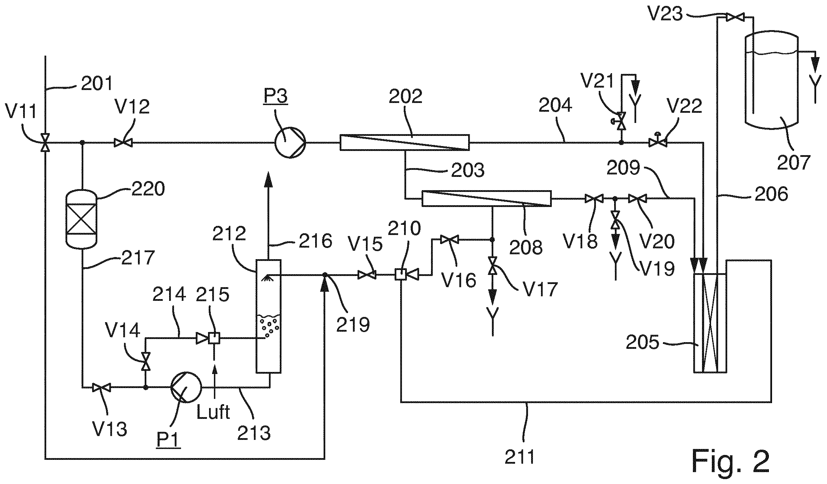

**Fig. 2** zeigt ein Fließbild einer Ausführungsform eines erfindungsgemäßen Verfahrens. Auch hier wird ein Wasserstrom in einer ersten Membrantrennvorrichtung **202** in einen ersten Konzentratstrom und einen ersten Permeatstrom aufgetrennt. Der Permeatstrom wird über die Leitung **204** unmittelbar in die Elektrodeionisationseinrichtung **205** bzw. in die Diluatkammer derselben überführt. Über die Leitung **206** wird der aus der Elektrodeionisationseinrichtung **205** austretende Produktstrom in einen Speicher **207** überführt. Der erste Konzentratstrom wird über die Leitung **203** in die zweite Membrantrennvorrichtung **208** eingespeist. In dieser erfolgt eine Auftrennung des ersten Konzentratstroms in einen zweiten Konzentratstrom und einen zweiten Permeatstrom. Der zweite Permeatstrom wird über die Leitung **209** der Konzentratkammer der Elektrodeionisationseinrichtung **205** zugeführt. Der zweite Konzentratstrom wird in die Strahlpumpe **210** eingespeist. In dieser fungiert er als Treibmedium. Die Strahlpumpe **210** erzeugt einen Unterdruck, mit dem Konzentrat aus der Elektrodeionisationseinrichtung **205** über die Leitung **211** angesaugt wird. Das Konzentrat aus der Elektrodeionisationseinrichtung wird mit dem zweiten Konzentratstrom vermischt und in die Entgasungsvorrichtung **212** eingedüst. Aus dieser kann es mittels der Pumpe P1 über die Leitung **213** abgeführt werden, wobei über die Leitung **214** eine teilweise oder vollständige Kreislaufführung möglich ist. Das im Kreislauf geführte Medium kann dabei mit Luft versetzt werden, beispielsweise mittels der Strahlpumpe **215**. Über den Auslass **216** können die Luft sowie abgetrennte Gase wie in der Elektrodeionisationseinrichtung **205** generierter Wasserstoff abgeführt werden. Die entgaste Mischung kann über die Leitung **217** der ersten Membrantrennvorrichtung **202** zugeführt werden.
   Abweichend von dem in Fig. 1 dargestellten Verfahren wird das aufzureinigende Rohwasser nicht unmittelbar in die erste Membrantrennvorrichtung **202** überführt. Stattdessen wird es über die Leitung **201** herangeführt und am Punkt **219** ins System eingespeist. Hier erfolgt eine Vermischung mit dem zweiten und dem dritten Konzentratstrom. Gemeinsam mit diesen wird das Rohwasser in der Entgasungsvorrichtung **212** entgast. Zudem wird entgaste Lösung noch in dem Adsorber **220** behandelt, um Wasserstoffperoxid aus der Deionisationseinrichtung **205** zu zerstören.
   Bei dem Rohwasser, das über die Leitung **201** herangeführt wird, handelt es sich bevorzugt um enthärtetes Rohwasser. Es kann aber auch vorgesehen sein, dass zwischen der Pumpe P1 und der Membrantrennvorrichtung **202** ein zusätzlicher Enthärter angeordnet ist. Bevorzugt ist dieser zwischen der Pumpe P1 und dem Adsorber **220** angeordnet.
   Die Bezugszeichen V11 bis V23 bezeichnen im Übrigen schließbare Ventile.

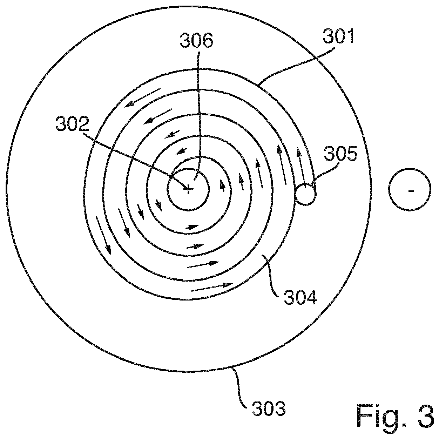

**Fig. 3** zeigt einen Querschnitt durch eine Elektrodeionisationseinrichtungen mit Wickelaufbau, die sich besonders für den Einsatz in einem erfindungsgemäßen Verfahren oder einer erfindungsgemäßen Anlage eignet. Die schematische Darstellung zeigt einen spiralförmigen Wickel aus einem Verbund **301** aus zwei ionenselektiven Membranen (die beiden Membranen sind der Übersichtlichkeit wegen nicht separat dargestellt). Der Kern des Wickels wird von der Anode **302** gebildet, umschlossen wird der Wickel außen von der Kathode **303**. In den Zwischenraum zwischen den einzelnen Windungen der Membranen, die Diluatkammer **304**, kann über den Einlass **305** das zu deionisierende Wasser eingeströmt werden. Der Auslass **306** befindet sich innerhalb der Anode **302**, die rohrförmig ausgebildet ist. Das Konzentrat fließt zwischen den zwei ionenselektiven Membranen, also innerhalb des dargestellten Verbundes **301**, hat aber in der Regel die gleiche Fließrichtung wie das Diluat. Ein- und Auslässe für das Konzentrat sind nicht dargestellt. Das Konzentrat kommt hier erst mit der Kathode **303**, dann mit der Anode **302** in Kontakt.

## Patentansprüche

1. Mehrstufiges Verfahren zur Aufbereitung von Wasser, insbesondere zur Herstellung von Reinstwasser, bei dem ein Rohwasserstrom zuerst in eine Membrantrennstufe eingespeist und anschließend in einer dieser nachgeschalteten Deionisationsstufe weiter aufgereinigt wird, wobei
- die Membrantrennstufe eine erste und eine zweite Membrantrennvorrichtung und die Deionisationsstufe eine Elektrodeionisationseinrichtung mit mindestens einer Konzentratkammer und mindestens einer Diluatkammer umfasst,
- der Rohwasserstrom in der ersten Membrantrennvorrichtung in einen ersten Konzentratstrom und einen ersten Permeatstrom aufgetrennt wird,
- der erste Konzentratstrom mindestens teilweise in der zweiten Membrantrennvorrichtung in einen zweiten Konzentratstrom und einen zweiten Permeatstrom aufgetrennt wird,
- der erste Permeatstrom mindestens teilweise in die mindestens eine Diluatkammer der nachgeschalteten Elektrodeionisationseinrichtung eingespeist wird, aus der er als Produktstrom wieder austritt und
- der zweite Permeatstrom mindestens teilweise in die mindestens eine Konzentratkammer der nachgeschalteten Elektrodeionisationseinrichtung eingespeist wird, aus der er als dritter Konzentratstrom wieder austritt,
**dadurch gekennzeichnet, dass** der zweite und der dritte Konzentratstrom zumindest teilweise in einer Vorrichtung zur Entgasung von Wasser entgast und dem Rohwasserstrom zugesetzt werden, bevor dieser in die Membrantrennstufe eingespeist wird.

2. Verfahren nach Anspruch 1, **dadurch gekennzeichnet, dass** der zweite und der dritte Konzentratstrom vor oder nach der Entgasung dem Rohwasserstrom zugesetzt werden.

3. Verfahren nach Anspruch 1 oder Anspruch 2, **dadurch gekennzeichnet, dass** der zweite und/oder der dritte Konzentratstrom und/oder der Rohwasserstrom in die Vorrichtung zur Entgasung von Wasser eingedüst werden, insbesondere über eine Einstoff-druckdüse.

4. Verfahren nach einem der vorhergehenden Ansprüche, **dadurch gekennzeichnet, dass** der zweite und/oder der dritte Konzentratstrom und/oder der Rohwasserstrom in der Vorrichtung zur Entgasung mit Luft gespült werden.

5. Verfahren nach einem vorhergehenden der Ansprüche, **dadurch gekennzeichnet, dass** der zweite Konzentratstrom als Treibmedium in eine Strahlpumpe eingespeist wird, die einen Unterdruck erzeugt, mit dem der dritte Konzentratstrom aus der mindestens einen Konzentratkammer gesaugt wird.

6. Verfahren nach einem der vorhergehenden Ansprüche, **dadurch gekennzeichnet, dass** dem zweiten Permeatstrom Sauerstoff zugesetzt wird, bevor dieser in die mindestens eine Konzentratkammer der nachgeschalteten Elektrodeionisationseinrichtung eingespeist wird.

7. Verfahren nach einem der vorhergehenden Ansprüche, **dadurch gekennzeichnet, dass** als Elektrodeionisationseinrichtungen eine mit Wickelaufbau verwendet wird und diese anodenseitig mit dem ersten und dem zweiten Permeatstrom gespeist wird.

8. Verfahren nach einem vorhergehenden der Ansprüche, **dadurch gekennzeichnet, dass** der zweite und/oder der dritte Konzentratstrom und/oder der Rohwasserstrom mit einem Mittel zur Zerstörung von Peroxid behandelt werden, bevor sie in die Membrantrennstufe eingespeist werden.

9. Anlage zur Aufbereitung von Wasser, insbesondere zur Durchführung eines Verfahrens nach einem der vorhergehenden Ansprüche, umfassend
- eine erste Membrantrennvorrichtung (102; 202) mit einem Zulauf für aufzubereitendes Wasser, einem Ablauf für Permeat und einem Ablauf für Konzentrat,
- eine zweite Membrantrennvorrichtung (108; 208) mit einem Zulauf für aufzubereitendes Wasser, einem Ablauf für Permeat und einem Ablauf für Konzentrat,
- eine Elektrodeionisationseinrichtung (105; 205) mit mindestens einer Konzentratkammer und mindestens einer Diluatkammer, umfassend jeweils einen Zulauf und einen Ablauf,
wobei
- der Konzentratablauf der ersten Membrantrennvorrichtung (102; 202) mit dem Zulauf der zweiten Membrantrennvorrichtung (108; 208) gekoppelt ist,
- der Permeatablauf der ersten Membrantrennvorrichtung (102; 202) mit dem Zulauf der Diluatkammer gekoppelt ist, und
- der Permeatablauf der zweiten Membrantrennvorrichtung (108; 208) mit dem Zulauf der Konzentratkammer gekoppelt ist,
**gekennzeichnet durch**
eine Vorrichtung zur Entgasung von Wasser (112; 212), die einen Zulauf aufweist, der mit dem Ablauf der Konzentratkammer und dem Konzentratablauf der zweiten Membrantrennvorrichtung (108; 208) gekoppelt ist, sowie einen Ablauf, der mit dem Zulauf der ersten Membrantrennvorrichtung (102; 202) gekoppelt ist.

## Claims

1. Multistage process for treating water, in particular for producing ultrapure water, in which a raw water stream is first fed into a membrane separation stage and is then further purified in a deionization stage downstream thereof, wherein
- the membrane separation stage comprises a first and a second membrane separation device and the deionization stage comprises an electrodeionization appliance having at least one concentrate chamber and at least one diluate chamber,
- the raw water stream in the first membrane separation device is separated into a first concentrate stream and a first permeate stream,
- the first concentrate stream is separated at least in part in the second membrane separation device into a second concentrate stream and a second permeate stream,
- the first permeate stream is fed at least in part into the at least one diluate chamber of the downstream electrodeionization appliance, from which it exits again as product stream, and
- the second permeate stream is fed at least in part into the at least one concentrate chamber of the downstream electrodeionization appliance, from which it exits again as third concentrate stream,
**characterized in that** the second and the third concentrate streams are degassed at least in part in a device for degassing water and are added to the raw water stream before this is fed into the membrane separation stage.

2. Process according to Claim 1, **characterized in that** the second and the third concentrate streams are added to the raw water stream upstream or downstream of the degassing.

3. Process according to Claim 1 or Claim 2, **characterized in that** the second and/or the third concentrate stream and/or the raw water stream are injected, in particular via a monocomponent pressure nozzle, into the device for degassing water.

4. Process according to any one of the preceding claims, **characterized in that** the second and/or the third concentrate stream and/or the raw water stream are purged with air in the device for degassing.

5. Process according to any one of the preceding claims, **characterized in that** the second concentrate stream is fed as motive medium into a jet pump which generates a reduced pressure with which the third concentrate stream is drawn out of the at least one concentrate chamber by suction.

6. Process according to any one of the preceding claims, **characterized in that** oxygen is added to the second permeate stream before this permeate stream is fed into the at least one concentrate chamber of the downstream electrodeionization appliance.

7. Process according to any one of the preceding claims, **characterized in that**, as electrodeionization appliances, one of such having a coil structure is used and this is fed on the anode side with the first and the second permeate streams.

8. Process according to any one of the preceding claims, **characterized in that** the second and/or the third concentrate stream and/or the raw water stream are treated with a means for destroying peroxide before they are fed into the membrane separation stage.

9. Unit for treating water, in particular for carrying out a process according to any one of the preceding claims, comprising
- a first membrane separation device (102; 202) having an inlet for water that is to be treated, a drain for permeate and a drain for concentrate,
- a second membrane separation device (108; 208) having an inlet for water that is to be treated, a drain for permeate and a drain for concentrate, and
- an electrodeionization appliance (105; 205) having at least one concentrate chamber and at least one diluate chamber, each comprising an inlet and a drain,
wherein
- the concentrate drain of the first membrane separation device (102; 202) is coupled to the inlet of the second membrane separation device (108; 208),
- the permeate drain of the first membrane separation device (102; 202) is coupled to the inlet of the diluate chamber, and
- the permeate drain of the second membrane separation device (108; 208) is coupled to the inlet of the concentrate chamber,
**characterized by**
a device for degassing water (112; 212) which has an inlet which is coupled to the drain of the concentrate chamber and the concentrate drain of the second membrane separation device (108; 208), and also a drain which is coupled to the inlet of the first membrane separation device (102; 202).

## Revendications

1. Procédé en plusieurs étapes de traitement de l'eau, en particulier pour la production d'eau très pure, dans lequel on amène d'abord un courant d'eau brute dans une étape de séparation à membrane et on l'épure ensuite encore dans une étape de déionisation qui suit, dans lequel
- l'étape de séparation à membrane comprend un premier et un deuxième dispositif de séparation à membrane et l'étape de déionisation comprend un dispositif d'électro-déionisation avec au moins une chambre de concentrat et au moins une chambre de diluat,
- on sépare le courant d'eau brute dans le premier dispositif de séparation à membrane en un premier courant de concentrat et un premier courant de perméat,
- on sépare le premier courant de concentrat au moins en partie dans le deuxième dispositif de séparation à membrane en un deuxième courant de concentrat et un deuxième courant de perméat,
- on amène le premier courant de perméat au moins en partie dans ladite au moins une chambre de diluat du dispositif d'électro-déionisation qui suit, hors duquel il sort de nouveau sous forme de courant de produit, et
- on amène le deuxième courant de perméat au moins en partie dans ladite au moins une chambre de concentrat du dispositif d'électro-déionisation qui suit, hors de laquelle il sort de nouveau sous la forme d'un troisième courant de concentrat,
**caractérisé en ce que** l'on dégaze le deuxième et le troisième courants de concentrat au moins en partie dans un dispositif de dégazage de l'eau et on les ajoute au courant d'eau brute, avant que ce dernier soit amené dans l'étape de séparation à membrane.

2. Procédé selon la revendication 1, **caractérisé en ce que** l'on ajoute le deuxième et le troisième courants de concentrat au courant d'eau brute avant ou après le dégazage.

3. Procédé selon la revendication 1 ou la revendication 2, **caractérisé en ce que** l'on pulvérise le deuxième et/ou le troisième courant de concentrat et/ou le courant d'eau brute dans le dispositif de dégazage de l'eau, en particulier au moyen d'une buse de pression à une matière.

4. Procédé selon l'une quelconque des revendications précédentes, **caractérisé en ce que** l'on balaie à l'air le deuxième et/ou le troisième courant de concentrat et/ou le courant d'eau brute dans le dispositif de dégazage.

5. Procédé selon l'une quelconque des revendications précédentes, **caractérisé en ce que** l'on amène le deuxième courant de concentrat en tant que milieu de propulsion dans une pompe à jet, qui produit une dépression avec laquelle le troisième courant de concentrat est aspiré hors de ladite au moins une chambre de concentrat.

6. Procédé selon l'une quelconque des revendications précédentes, **caractérisé en ce que** l'on ajoute de l'oxygène au deuxième courant de perméat, avant que celui-ci soit amené dans ladite au moins une chambre de concentrat du dispositif d'électro-déionisation qui suit.

7. Procédé selon l'une quelconque des revendications précédentes, **caractérisé en ce que** l'on utilise comme dispositifs d'électro-déionisation un dispositif comportant une structure enroulée et celui-ci est alimenté côté anode avec le premier et le deuxième courants de perméat.

8. Procédé selon l'une quelconque des revendications précédentes, **caractérisé en ce que** l'on traite le deuxième et/ou le troisième courant de concentrat et/ou le courant d'eau brute avec un moyen de destruction de peroxyde, avant qu'ils soient amenés dans l'étape de séparation à membrane.

9. Installation de traitement de l'eau, en particulier pour la mise en oeuvre d'un procédé selon l'une quelconque des revendications précédentes, comprenant
- un premier dispositif de séparation à membrane (102; 202) avec une arrivée pour l'eau à traiter, une évacuation pour le perméat et une évacuation pour le concentrat,
- un deuxième dispositif de séparation à membrane (108; 208) avec une arrivée pour l'eau à traiter, une évacuation pour le perméat et une évacuation pour le concentrat,
- un dispositif d'électro-déionisation (105; 205) avec au moins une chambre de concentrat et au moins une chambre de diluat, comprenant respectivement une arrivée et une évacuation,
dans laquelle
- l'évacuation de concentrat du premier dispositif de séparation à membrane (102; 202) est couplée à l'arrivée du deuxième dispositif de séparation à membrane (108; 208),
- l'évacuation de perméat du premier dispositif de séparation à membrane (102; 202) est couplée à l'arrivée de la chambre de diluat, et
- l'évacuation de perméat du deuxième dispositif de séparation à membrane (108; 208) est couplée à l'arrivée de la chambre de concentrat,
**caractérisée par** un dispositif de dégazage de l'eau (112; 212), qui présente une arrivée, qui est couplée à l'évacuation de la chambre de concentrat et à l'évacuation de concentrat du deuxième dispositif de séparation à membrane (108; 208), ainsi qu'une évacuation, qui est couplée à l'arrivée du premier dispositif de séparation à membrane (102; 202).
